# FASCICULE DE BREVET EUROPEEN

(11) **EP 3 096 998 B1**
(45) Date de publication et mention de la délivrance du brevet: **20.06.2018**
(21) Numéro de dépôt: 15700729.5
(22) Date de dépôt: 20.01.2015
(51) Int. Cl.: B62D 25/00

(54) **DISPOSITIF DE STRUCTURE DE CARROSSERIE DE VÉHICULES**
VORRICHTUNG FÜR FAHRZEUGKAROSSERIEAUFBAU
VEHICLE BODYWORK STRUCTURE DEVICE

(30) Priorité: 20.01.2014 FR 1450441
(43) Date de publication de la demande: 30.11.2016
(73) Titulaire: Autotech Engineering, A.I.E., 48340 Amorebieta-Etxano (ES)
(72) Inventeur: CAZES, Christophe, 78000 Versailles (FR); GATARD, Grégory, 91310 Leuville Sur Orge (FR); BARELLI, Vincent, 91620 La Ville du Bois (FR); DELGERIE, Xavier, 92350 Le Plessis Robinson (FR)
(74) Mandataire: ZBM Patents - Zea, Barlocci & Markvardsen
(86) Numéro de dépôt international: PCT/EP2015/051038
(87) Numéro de publication internationale: WO 2015/107227

(56) Documents cités:
- EP-A2- 1 190 938
- EP-B1- 2 066 549
- DE-A1- 10 007 358
- DE-A1- 10 037 494
- GB-A- 2 497 396
- US-A- 5 613 727
- US-A- 5 938 275
- US-A1- 2001 024 054
- US-A1- 2012 119 477
- US-A1- 2013 020 833
- US-B1- 6 679 540

## Description

### DOMAINE DE L'INVENTION

La présente invention concerne le domaine des pièces métalliques intervenant dans la réalisation d'une ossature métallique, notamment d'un châssis ou d'une carrosserie de véhicules.

### ETAT DE LA TECHNIQUE

On a déjà réalisé de nombreuses poutres métalliques pour carrosserie de véhicules.

On connaît déjà par exemple le document EP2066549 qui décrit une poutre pour carrosserie de véhicules comportant un renfort composé d'un premier élément en forme de chapeau qui comporte un fond rainuré, deux murs chacun relié à une extrémité du fond rainuré, ainsi que deux bras chacun relié à une extrémité d'un mur. Ce premier élément est fixé sur un second élément en forme de U disposant d'un fond, rainuré peu profondément, qui est fixé par sa rainure à la rainure du fond du premier élément. Chacune des extrémités du fond du second élément est reliée à un mur qui est fixé au mur du premier élément auquel il est juxtaposé.

On connaît également le document EP1498345 qui décrit une poutre pour carrosserie de véhicules. La poutre comprend deux éléments qui sont disposés dans la longueur de la poutre et qui sont prévus pour assurer la résistance à une flexion dans le sens de la longueur de la poutre qui serait créée par l'application d'un effort transversal à la poutre, typiquement lors de la collision entre plusieurs véhicules. La poutre comprend également un renfort en forme de U qui est relié par ses murs aux éléments.

On connaît également les documents JP2001151151 et US20090085379 qui décrivent tous les deux des poutres pour carrosserie de véhicules comportant sur toute leur longueur une structure alvéolaire formée par des renforts longitudinaux et des renforts transversaux.

On connaît également le document US2005285416 qui décrit un pare-chocs composé d'une pièce supérieure en forme de chapeau dont le fond est rainuré, et d'un renfort en forme de chapeau. Le renfort est emboîté dans la pièce supérieure de sorte que le fond du renfort soit fixé au fond au niveau de la rainure sans que le renfort ne soit en contact avec les murs de la pièce supérieure.

On connait par ailleurs différents types de structure de poutre décrits dans les documents GB 2 497 396, DE 100 37 494, US 5 613 727, US 2012/119477, US 5 938 275 et US 2001/024054.

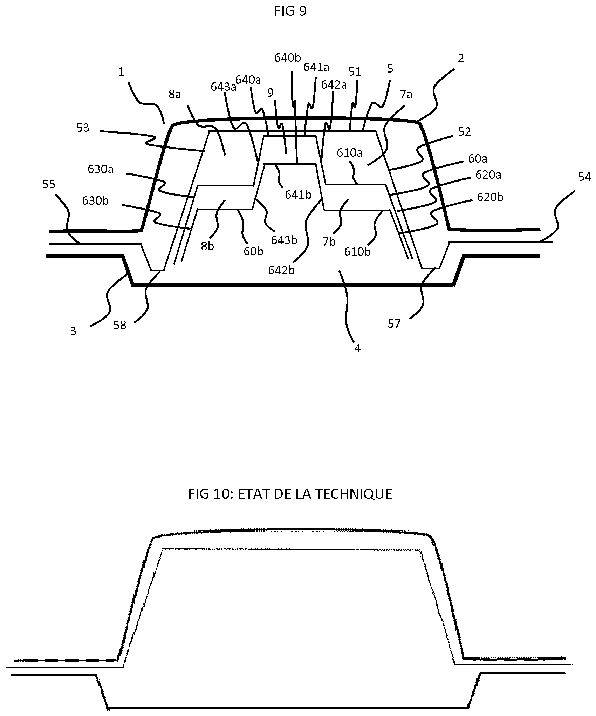

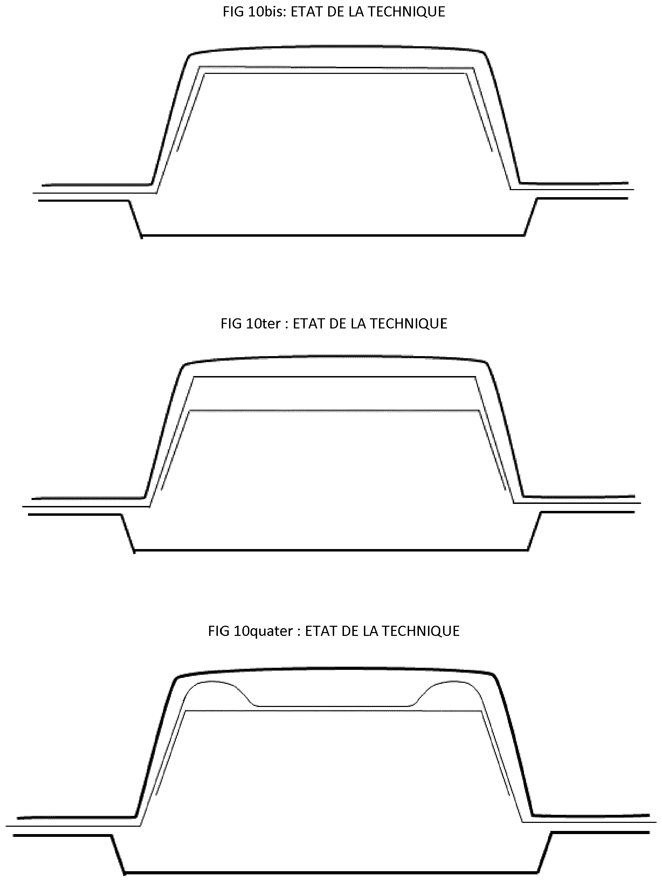

On connaît également la poutre de carrosserie présentée en vue de coupe transversale dans la figure 10. Cette poutre est composée d'un côté de caisse en forme de chapeau et d'une doublure en forme de chapeau. Les concavités du côté de caisse et de la doublure étant dirigées de telle sorte qu'il existe en un espace intérieur entre le côté de caisse et la doublure. Entre le côté de caisse et la doublure est disposé un renfort principal en forme de chapeau. Des soudures sont réalisées au niveau de chacun des deux bras du bas de caisse, de la doublure et du renfort principal, de manière à les fixer ensemble. Une nervure est réalisée sur le fond du renfort principal. Un renfort secondaire en forme de U dont le fond est rainuré est emboîté dans le renfort principal, de telle sorte qu'il soit en permanence en contact avec le renfort principal. Des soudures sont réalisées à chaque mur et sur le fond de la rainure des renforts principal et secondaire de manière à les fixer ensemble.

Toutes les solutions décrites précédemment ne permettent pas d'offrir une résistance et une rigidité suffisante à la poutre et ne permettent également pas de créer des zones dont la déformation est prévue lors de l'application d'un effort de compression sur la poutre ainsi que d'un effort de flexion induit par cette compression, typiquement lors d'une collision entre plusieurs véhicules, afin d'assurer la sécurité des personnes à l'intérieur des véhicules.

On connaît également le document EP1190938 qui décrit une poutre pour carrosserie de véhicules comportant deux renforts. Le premier renfort est composé d'un premier élément en forme de chapeau relié à un second élément en forme de U. Les éléments sont reliés par emboîtement partiel du second élément dans le premier élément. Le deuxième renfort est composé d'un élément en forme de U qui est emboîté dans la pièce intérieure en forme de chapeau dont le fond est rainuré. La poutre est partiellement remplie d'une résine dure afin d'augmenter la rigidité de la structure. Cette solution pose le problème d'offrir une rigidité trop importante qui ne permet de créer des zones dont la déformation est prévue lorsqu'un effort est appliqué transversalement par rapport à la poutre, typiquement lors d'une collision entre plusieurs véhicules, permettant ainsi d'assurer une meilleure sécurité pour les personnes à bord des véhicules.

Ainsi force est de constater que malgré la littérature très abondante déjà publiée, et donc des efforts de recherche très importants déjà consacrés dans le domaine du développement de poutres pour la réalisation de structure de véhicule automobile, l'homme de l'art n'est pas parvenu jusqu'ici à une solution vraiment satisfaisante.

### OBJET DE L'INVENTION

L'invention a pour objectif de proposer une nouvelle géométrie de pièces pour assurer une bonne résistance et rigidité, ainsi que permettre la création de zones dont la déformation est prévue lors de l'application d'une contrainte.

L'objet précité est atteint selon l'invention grâce à une poutre de carrosserie de véhicule automobile possédant une direction longitudinale et comportant:
- un renfort principal disposant d'un fond, deux murs formant avec ledit fond un angle compris entre 80° et 120°, et deux bras sensiblement parallèles au fond en étant inclinés par rapport au fond d'un angle maximal de 10°;
- au moins un renfort secondaire disposant d'un fond et d'au moins un mur formant avec le fond, un angle compris entre 80° et 120°, ledit au moins un renfort secondaire est fixé au renfort principal;
dans laquelle :
- le renfort principal et au moins un renfort secondaire sont fixés au niveau de chaque mur,
- l'un au moins des murs et/ou fond du renfort principal et/ou du renfort secondaire comportant une transition telle que au moins une partie du fond du renfort secondaire est en contact avec une partie du fond du renfort principal,
- la poutre de carrosserie comporte au moins une alvéole fermée constituée par l'assemblage du renfort principal et d'un renfort secondaire et comprenant quatre segments linéaires formés par des éléments de murs ou des fonds du renfort principal et/ou du renfort secondaire, au moins trois segments linéaires couvrant au moins 50% de la dimension correspondante de l'alvéole, de sorte que deux segments sont orientés transversalement au fond du renfort principal, et les deux autres segments sont sensiblement perpendiculaires auxdits deux premiers segments selon un angle compris entre 80° et 120°, caractérisée en ce que au moins un des segments linéaires comporte une rainure ou un décrochage ou marche.

Après de nombreuses recherches le demandeur a déterminé que le compromis particulier répondant à la définition ci-dessus permet d'optimiser la résistance et la rigidité mécaniques de la poutre par rapport notamment à sa masse.

Dans le cadre de la présente demande on entend par « une alvéole fermée possédant quatre segments linéaires », une alvéole fermée qui possède au moins quatre segments linéaires et donc qui peut le cas échéant être délimitée par un nombre de segments supérieurs à quatre, par exemple cinq segments.

Dans le cadre de la présente demande on entend par « linéaire » un segment dont la flèche est inférieure à 10%. (rapport entre l'écart qui sépare une corde qui sous-tend un segment et le point du segment le plus éloigné de cette corde, et l'amplitude de la corde).

Selon d'autres caractéristiques avantageuses mais non limitatives de l'invention:
- Le renfort principal et au moins un renfort secondaire sont fixés au niveau de chacun de leurs murs et/ou au moins deux renforts secondaires sont fixés au niveau de chacun de leurs murs ;
- Le fond du renfort principal et/ou le fond d'au moins un renfort secondaire sont nervurés, et ledit fond du renfort principal et/ou ledit fond d'au moins un renfort secondaire sont reliés au niveau de leur nervure respective ; et/ou au moins deux renforts secondaires comportent un fond nervuré et lesdits au moins deux renforts secondaires sont reliés par chacun de leur fond au niveau de leur nervure respective ;

- Le renfort principal et/ou au moins un renfort secondaire comportent un fond rainuré dont la rainure est centrée;
- Le renfort principal et/ou au moins un renfort secondaire comportent un fond rainuré dont la rainure est excentrée sur un côté;
- Le renfort principal et au moins un renfort secondaire comportent un fond rainuré dont la rainure est oblique, et/ou au moins deux renforts secondaires comportent un fond rainuré dont la rainure est oblique;
- Le renfort principal et/ou au moins un renfort secondaire comportent un fond rainuré dont ledit fond rainuré dont la rainure comporte des flancs de longueurs différentes ;
- Au moins un renfort secondaire est disposé au-dessus du renfort principal ;
- Au moins un renfort secondaire est disposé en-dessous du renfort principal;
- Au moins un renfort secondaire est en forme de L ;
- Au moins un renfort secondaire est en forme de U ;
- Ladite au moins une alvéole formée par le renfort principal et un renfort secondaire, et/ou par au moins deux renforts secondaires, comporte une hauteur comprise entre 8mm et 100 mm ;
- Le renfort principal et les renforts secondaires comportent un fond rainuré comportant une rainure de profondeur comprise en 8mm et 50mm ;
- La hauteur de chaque alvéole considérée perpendiculairement au fond du renfort principal est inférieure ou égale au tiers de la profondeur totale de la poutre de carrosserie.
- Les rayons des angles de transition entre deux segments linéaires adjacents sont inférieurs à 10mm et ont une dimension inférieure à celle desdits segments adjacents.
   D'autres caractéristiques, buts et avantages de la présente invention apparaîtront à la lecture de la description détaillée qui va suivre, et en regard des dessins annexés, donnés à titre d'exemples non limitatifs et sur lesquels:
   - la figure 1 représente une vue de coupe transversale un premier exemple d'une poutre de carrosserie ;
   - la figure 2 représente une vue en coupe transversale un exemple différent d'une poutre de carrosserie;
   - la figure 3 représente une vue en coupe transversale d'un autre exemple d'une poutre de carrosserie;
   - la figure 4 représente une vue en coupe transversale d'un exemple supplémentaire d'une poutre de carrosserie;
   - la figure 5 représente une vue en coupe transversale d'un exemple d'une de poutre de carrosserie permettant d'obtenir une dysmétrie dans la structure de la poutre de carrosserie;
   - la figure 6 représente une vue en coupe transversale d'un exemple d'une poutre de carrosserie permettant d'obtenir une dysmétrie dans la structure de la pièce qui diffère de celui présenté dans la figure 5 ;
   - la figure 7 représente une vue en coupe transversale d'un exemple d'une poutre de carrosserie permettant d'obtenir une dysmétrie dans la structure de la poutre de carrosserie qui diffère de ceux présentés dans les figures 5 et 6 ;
   - la figure 8 représente une vue en coupe transversale d'un exemple d'une poutre de carrosserie permettant d'obtenir une dysmétrie dans la taille des alvéoles ;
   - la figure 9 représente une vue en coupe transversale d'un exemple d'une poutre de carrosserie comportant plusieurs renforts secondaires ;
   - la figure 10 représente une vue en coupe transversale d'une première poutre de carrosserie selon l'état de l'art antérieur ;
   - la figure 10bis représente une vue en coupe transversale d'une seconde poutre de carrosserie selon l'état de l'art antérieur ;
   - la figure 10ter représente une vue en coupe transversale d'une troisième poutre de carrosserie selon l'état de l'art antérieur utilisant la solution décrite dans le brevet EP1 190938 ;
   - la figure 10quater représente une vue en coupe transversale d'une quatrième poutre de carrosserie selon l'état de l'art antérieur utilisant la solution décrite dans le brevet EP2066549 ;

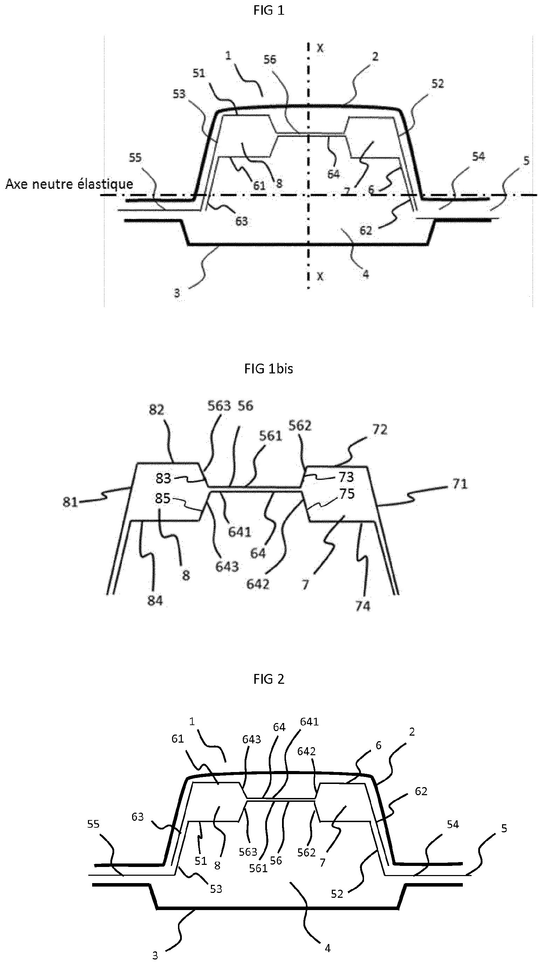

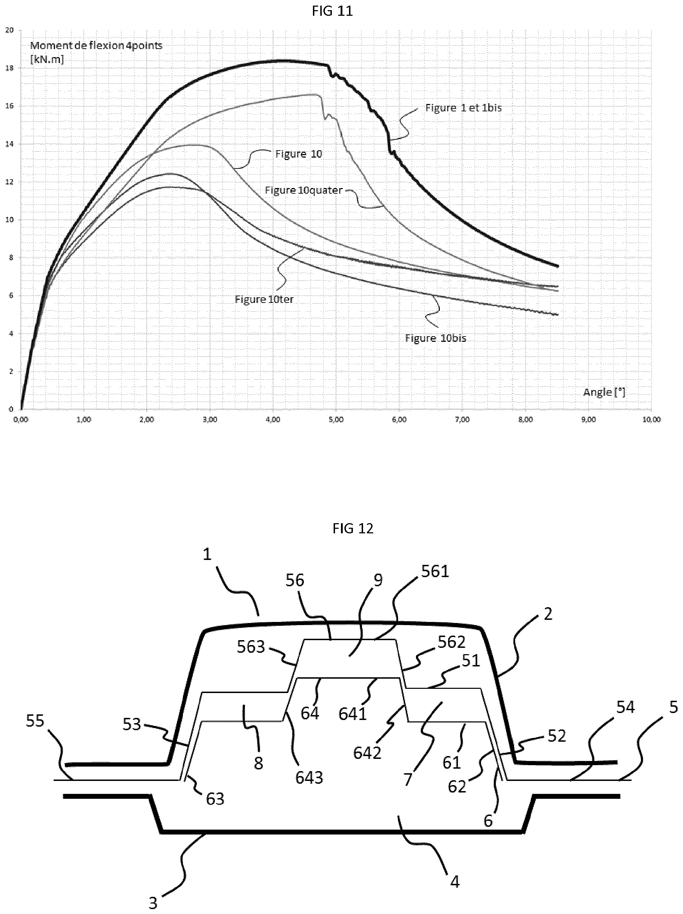

   - la figure 11 représente une courbe qui compare la résistance en flexion quatre points d'une poutre de carrosserie selon le premier exemple présenté figure 1 et 1 bis, une poutre selon l'état de la technique présentée figure 10 et une poutre selon l'état de la technique présentée figure 10bis ;
   - la figure 12 représente une vue en coupe transversale d'un exemple additionnel d'une poutre de carrosserie;

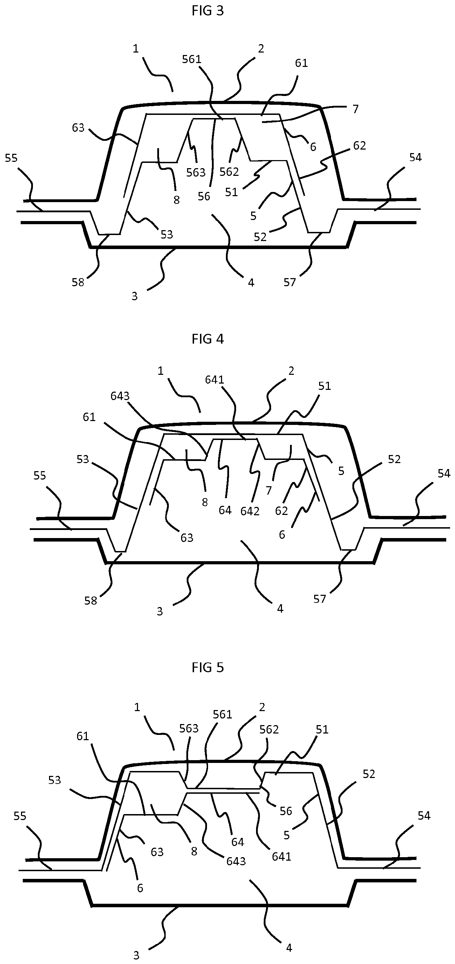

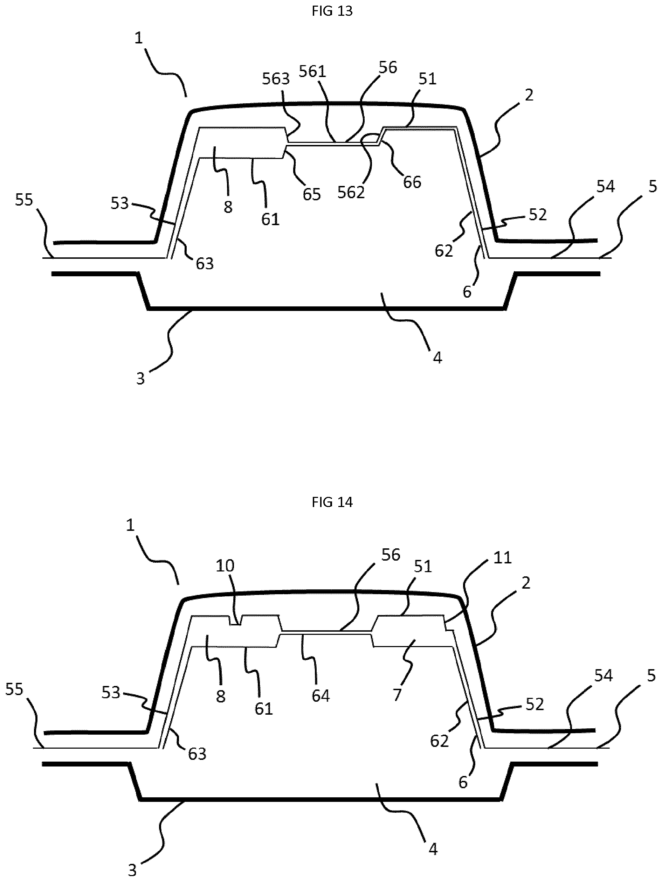

   - la figure 13 représente une vue en coupe transversale d'un exemple d'une poutre de carrosserie qui est une alternative au mode de réalisation présenté dans la figure 5 ;
   - la figure 14 représente une vue en coupe transversale d'une poutre de carrosserie selon un mode de réalisation de l'invention;

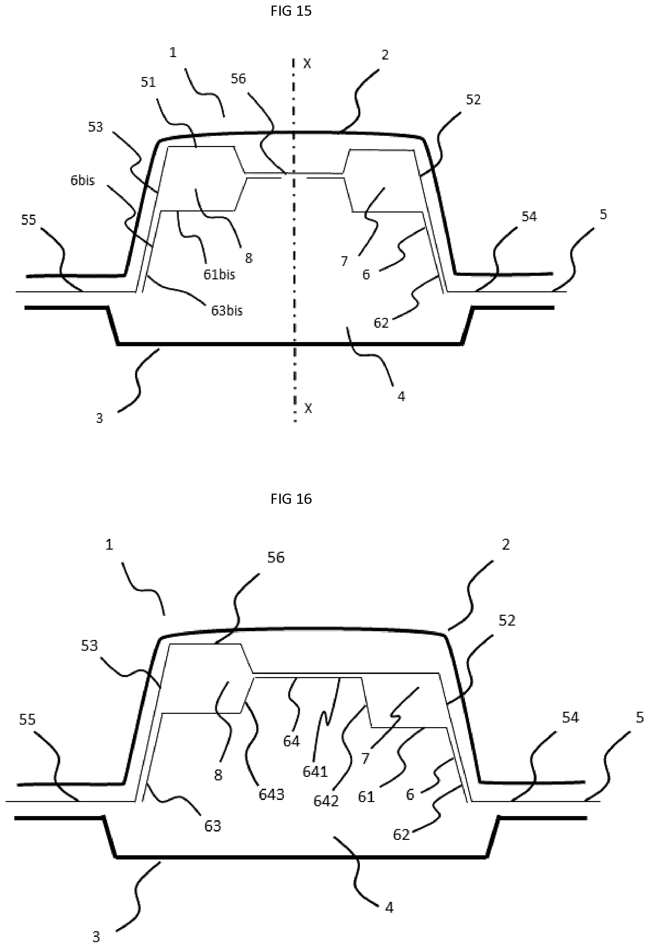

   - la figure 15 représente une vue en coupe transversale d'un exemple d'une poutre de carrosserie utilisant plusieurs renforts secondaires mis côte à côte ;

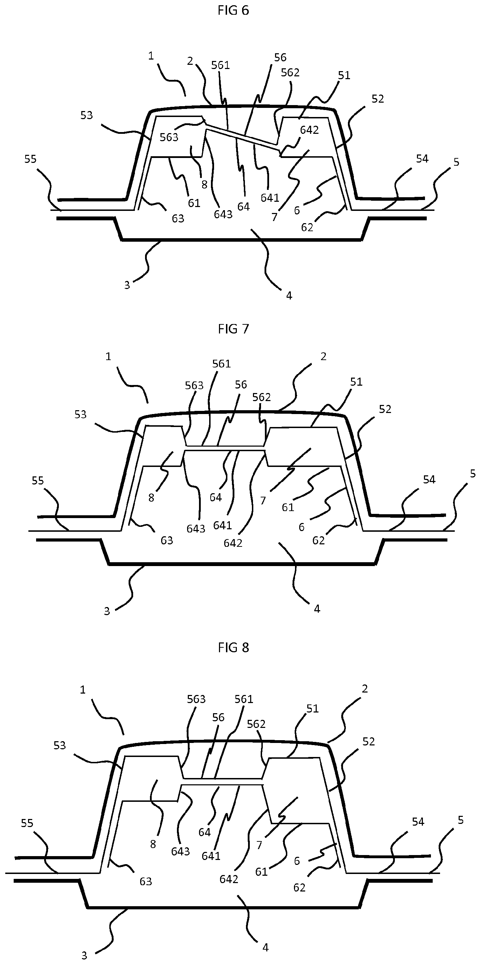

   - la figure 16 représente une vue en coupe transversale d'un exemple d'une poutre de carrosserie qui est une variante du mode de réalisation décrit dans la figure 7 ;

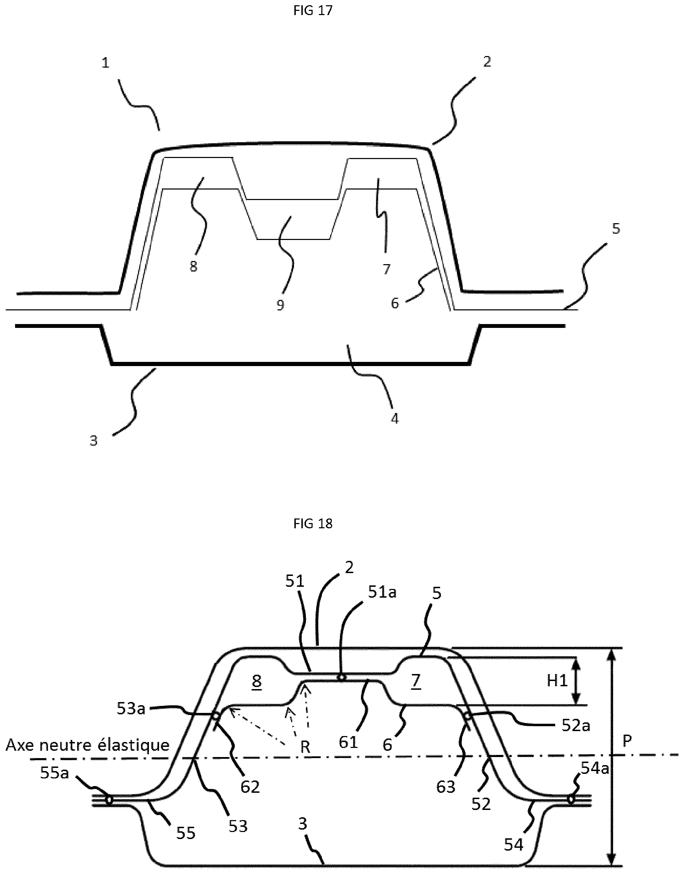

   - la figure 17 représente une vue en coupe transversale d'un exemple d'une poutre de carrosserie qui est une variante du mode de réalisation décrit dans la figure 12
   - la figure 18 schématise sur une vue en coupe transversale les caractéristiques de base de l'invention,

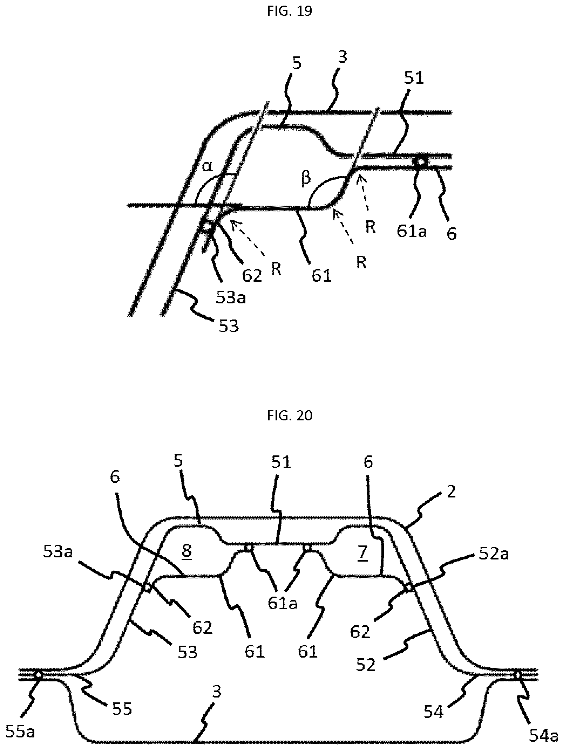

   - la figure 19 schématise une vue détaillée d'une alvéole représenté sur la coupe transversale de la figure 18, de manière à représenter des caractéristiques de base de l'invention,
   - la figure 20 schématise de manière similaire les caractéristiques de base de l'invention sur une vue en coupe transversale d'une poutre conforme à une autre variante,

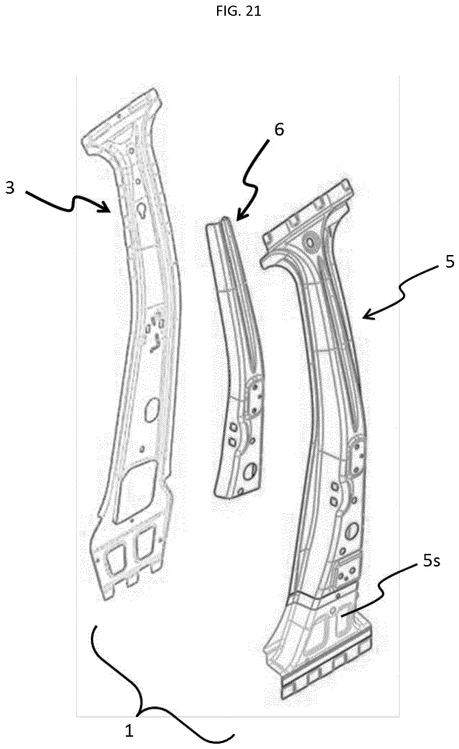

   - la figure 21 représente une vue en perspective éclatée d'une poutre formée par l'assemblage d'un renfort principal, d'un renfort secondaire et d'une doublure,

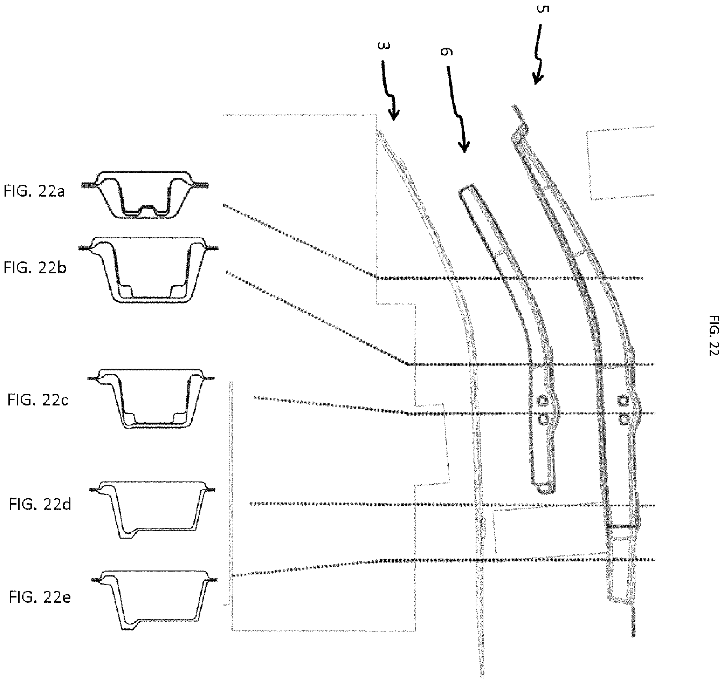

   - la figure 22 représente une vue latérale des mêmes pièces, à savoir un renfort principal, un renfort secondaire et une doublure, ainsi que 5 sections successives de cet ensemble.
- Comme présenté sur les figures 1 à 9, et 12 à 17, ainsi que 18 à 22, la présente invention concerne une poutre de carrosserie 1 allongée selon une direction longitudinale transversale au plan des figures 1 à 9 et 12 à 19, qui comprend :un renfort principal 5 en forme de chapeau, qui est disposé dans l'espace 4 entre le côté de caisse 2 et la doublure 3. Le renfort principal 5 comporte un fond 51 relié à chacune de ses extrémités à un mur respectif 52, 53. Les murs 52 et 53 sont chacun reliés à leur dernière extrémité à un bras 54, 55. Les angles formés par les murs 52 et 53 avec le fond 51 sont sensiblement égaux à 90°, ils sont avantageusement compris entre 80° et 120°. Les bras 54 et 55 sont sensiblement parallèles au fond 51, la différence d'angle entre les bras 54 et 55 avec le fond 51 étant inférieur à 10°, et sont préférentiellement orientés vers l'extérieur.
- Au moins un renfort secondaire 6, 60a, 60b qui est disposé dans l'espace 4 entre le côté de caisse 2 et la doublure 3. L'ajout d'au moins un renfort secondaire 6, 60a, 60b permet d'apporter à la structure une meilleure rigidité en créant au moins une alvéole 7, 8, 7a, 8a, 7b, 8b, 9. Le au moins un renfort secondaire 6, 60a, 60b peut être en forme d'un U qui dispose d'un fond 61 , 610a, 610b relié à chacune de ses extrémités à un mur 62, 63, 620a, 620b, 630a, 630b, ou bien en forme d'un L qui dispose d'un fond 61 , 610a, 610b relié à une seule de ses extrémités à un mur 62, 63, 620a, 620b, 630a, 630b. Les angles formés par les murs 62, 63, 620a, 620b, 630a et 630b avec le fond 61, 610a, 610b sont sensiblement égaux à 90°, ils sont avantageusement compris entre 80° et 120°.

Comme visible sur les figures 1 à 9, 12 à 17, ainsi que 18 à 22, la poutre peut également comprendre :
- un côté de caisse 2 en forme de chapeau, qui est disposé sur la face extérieure de la poutre de carrosserie 1 , la face extérieure étant la face qui est dirigée vers l'extérieur du véhicule, et qui est la face sur laquelle un effort va directement s'appliquer lors d'une collision entre deux véhicules par exemple.
- une doublure 3 en forme de chapeau, qui est disposée sur la face intérieure de la poutre de carrosserie 1, la face intérieure étant la face qui est dirigée vers l'intérieur du véhicule. Le côté de caisse 2 et la doublure 3 sont disposés en dirigeant leur concavité l'une vers l'autre, en regard, vers l'intérieur de la poutre de carrosserie 1, de sorte à créer un espace 4.

La poutre 1 peut avoir une section constante sur toute sa longueur. Les renforts 5, 6, 60a et 60b sont fixés ensemble. Préférentiellement, les renforts 5, 6, 60a et 60b sont reliés par chacun de leurs murs, et peuvent également être relié par leur fond. Ils peuvent être fixés au niveau de leurs points de contact par soudage ou rivetage. D'autres techniques d'assemblage connues de l'homme du métier, comme par exemple le malaxage ou le collage, peuvent également être utilisées en fonction des différents avantages qu'elles peuvent apporter.

Le côté de caisse 2, la doublure 3 et le renfort principal 5 sont fixés, par exemple par soudage, au niveau de chacun de leurs bras.

Dans cette demande de brevet, on définit qu'un renfort secondaire 6, 60a ou 60b est placé au-dessus du renfort principal 5 s'il est disposé entre le côté de caisse 2 et ledit renfort principal 5. On définit également qu'un renfort 6, 60a ou 60b est disposé en-dessous du renfort principal 5 s'il est disposé entre la doublure 3 et ledit renfort principal 5.

Dans l'exemple présenté dans les figures 1 et 1 bis, le renfort secondaire 6 est placé en-dessous du renfort principal 5, de manière à s'emboîter dans ledit renfort principal 5 et à mettre en contact les murs 63 et 53 ainsi que les murs 52 et 62. Le fond 51 du renfort principal 5, dispose d'une rainure 56 qui est centrée par rapport aux deux murs 52 et 53 et dont la concavité est orientée vers le côté de caisse 2. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. Le fond 61 du renfort secondaire 61 comporte également une rainure 64 centrée par rapport aux deux murs 62 et 63, et dont la concavité est orientée vers la doublure 3. La rainure 64 comporte un fond 641 reliée à chacune de ses deux extrémités à un flanc 642 et 643. Les flancs 642 et 643 sont sensiblement perpendiculaires au fond 641, les angles formés par les flancs 642 et 643 avec le fond 641 étant compris entre 80° et 120°. L'orientation, ainsi que la profondeur, des rainures 56 et 64 permettent de mettre en contact les renforts 5 et 6 au niveau du fond 561 et 641 de leur rainure respective 56 et 64. L'angle formé par les flancs 562 et 642 ainsi que l'angle formé par les flancs 563 et 643, sont tous les deux compris entre 160° et 180°. La disposition des renforts 5 et 6 permet ainsi de former deux alvéoles 7 et 8. Les segments de l'alvéole 7 sont formés par le mur 52, le fond 51 , le flanc 562 de la rainure 56, le flanc 642 de la rainure 64, et le fond 61 . Plus précisément, comme indiqué sur la figure 1 bis, le segment 71 est formé par le mur 52, le segment 72 est formé par le fond 51, le segment 73 est formé par le flanc 562, le segment 74 est formé par le fond 61, et le segment 75 est formé par le flanc 642. Les segments de l'alvéole 8 sont formés par le mur 53, le fond 51, le flanc 563 de la rainure 56, le flanc 643 de la rainure 64, et le fond 61. Plus précisément, comme indiqué sur la figure 1 bis, le segment 81 est formé par le mur 53, le segment 82 est formé par le fond 51, le segment 83 est formé par le flanc 563, le segment 84 est formé par le fond 61, et le segment 85 est formé par le flanc 643. Ainsi, les alvéoles 7 et 8 disposent de cinq segments, respectivement 71 , 72, 73, 74, 75 et 81 , 82, 83, 84, 85 dont trois segments 71 , 73, 75 et 81 , 83, 85 sont sensiblement transversaux au fond 51 du renfort principal 5, l'angle formé par le fond 51 et les segments 71 , 73, 75, 81 , 83, 85 étant compris entre 80° et 120°, et les deux autres segments 72, 74 et 82, 84 sont sensiblement perpendiculaires aux premiers, soit globalement parallèles au fond 51 .

Selon une variante de cet exemple, les flancs 562, 642 et 563, 643 des rainures 56 et 64 ne forment sensiblement qu'un seul segment pour chacune des alvéoles car les renforts 5 et 6 étant fixés entre eux, les rainures 64 et 56 ne peuvent bouger de manière indépendante l'une de l'autre, et les angles formés par les flancs 562, 642 et 563, 643 des rainures 56 et 64 sont sensiblement plats, car la flèche des segments formés par les flancs 562, 642 et 563, 643 est inférieure à 10% (lorsque les angles entre les flancs 562, 642 et 563, 643 sont proches de 180°).

La comparaison entre les courbes de résistance en flexion 4 points présentée figure 11, entre la poutre de carrosserie 1, une poutre suivant l'état de l'art exposée dans la figure 10, une poutre suivant l'état de l'art exposée dans la figure 10bis, une poutre suivant l'état de l'art exposée dans la figure 10ter et une poutre suivant l'état de l'art exposée dans la figure 10quater, montre clairement que l'invention permet d'obtenir une meilleure résistance. Dans le cadre de la comparaison de la résistance, le côté de caisse 2, la doublure 3, le renfort principal 5 et le renfort secondaire 6 ont été soudés de la même manière pour toutes les poutres. De plus, les tests ont été réalisés avec des poutres iso-masse. Dans la figure 10, le côté de caisse a une épaisseur de 0,7mm, la doublure à une épaisseur de 1,2mm, et le renfort principal a une épaisseur de 1 ,9mm. Dans la figure 10bis, le côté de caisse a une épaisseur de 0,7mm, la doublure a une épaisseur de 1,2mm, et le renfort principal a une épaisseur de 1,5mm et le renfort secondaire a une épaisseur de 0,8mm. Dans les figures 10bis, ter et quater, le côté de caisse a une épaisseur de 0,7mm, la doublure à une épaisseur de 1,2mm, et le renfort principal a une épaisseur de 1,5mm et le renfort secondaire a une épaisseur de 0,8mm.

Dans l'exemple exposé dans la figure 2, le renfort secondaire 6 est disposé au-dessus du renfort principal 5, de manière à ce que ledit renfort principal 5 s'emboîte dans le renfort secondaire 5, mettant ainsi en contact les murs 52 et 62, ainsi que les murs 53 et 63. Le fond 51 du renfort principal 5 dispose d'une rainure 56 dont la concavité est dirigée vers la doublure 3. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. Le fond 61 du renfort secondaire 6 dispose d'une rainure 64 dont la concavité est orientée vers le côté de caisse 2. La rainure 64 comporte un fond 641 reliée à chacune de ses deux extrémités à un flanc 642 et 643. Les flancs 642 et 643 sont sensiblement perpendiculaires au fond 641, les angles formés par les flancs 642 et 643 avec le fond 641 étant compris entre 80° et 120°. L'orientation, ainsi que la profondeur, des rainures 56 et 64 permettent de mettre en contact les renforts 5 et 6 au niveau du fond 561 et 641 de leur rainure respective 56 et 64. L'angle formé par les flancs 562 et 642 ainsi que l'angle formé par les flancs 563 et 643, sont tous les deux compris entre 160° et 180°. La disposition des renforts 5 et 6 permet ainsi de former deux alvéoles 7 et 8. Les segments de l'alvéole 7 sont formés par le mur 62, le fond 51, le flanc 562 de la rainure 56, le flanc 642 de la rainure 64, et le fond 61. Les segments de l'alvéole 8 sont formés par le mur 63, le fond 51, le flanc 563 de la rainure 56, le flanc 643 de la rainure 64, et le fond 61. Ainsi, les alvéoles 7 et 8 disposent de cinq segments, dont deux sont transversaux au fond 51 du renfort principal 5, et les deux autres sont sensiblement perpendiculaires aux premiers.

Selon une variante de cet exemple, les rainures 56 et 64 ne forment sensiblement qu'un seul segment pour chacune des alvéoles car les renforts 5 et 6 étant fixés entre eux, les rainures 64 et 56 ne peuvent bouger de manière indépendante l'une de l'autre, et les angles formés par les flancs 562, 642 et 563, 643 des rainures 56 et 64 sont sensiblement plats, car la flèche des segments formés par les flancs 562, 642 et 563, 643 est inférieure à 10% (lorsque les angles entre les flancs 562, 642 et 563, 643 sont proches de 180°).

Dans l'exemple exposé dans la figure 3, le renfort secondaire 6 est disposé au-dessus du renfort principal 5, de manière à ce que ledit renfort principal 5 s'emboîte dans ledit renfort secondaire 6, mettant ainsi en contact les murs 52 et 62, ainsi que les murs 53 et 63. Le fond 51 du renfort principal 5 dispose d'une rainure 56 dont la concavité est dirigée vers la doublure 3. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. L'orientation, ainsi que la profondeur, de la rainure 56 permettent de mettre en contact le fond 561 avec le fond 61 du renfort secondaire 6. Le renfort principal 5 dispose également de deux rainures 57 et 58 qui sont localisées entre les murs 52, 53 et les bras 54, 55. La concavité des rainures 57 et 58 est dirigée vers le côté de caisse 2. Ces deux rainures 57 et 58 permettent d'augmenter la résistance du renfort 5 à l'application d'une compression transversale à la poutre 1 ainsi qu'à la flexion induite par cette compression, cette compression étant créée par exemple par une collision entre deux véhicules. La disposition des renforts 5 et 6 permet de former deux alvéoles 7 et 8. Les segments de l'alvéole 7 sont formés par le mur 62, le fond 51, le flanc 562 de la rainure 56, et le fond 61. Les segments de l'alvéole 8 sont formés par le mur 63, le fond 51, le flanc 563 de la rainure 56, et le fond 61. Ainsi, les alvéoles 7 et 8 disposent de quatre segments, dont deux sont transversaux au fond 51 du renfort principal 5, et les deux autres sont sensiblement perpendiculaires aux premiers, les angles formés par les segments étant compris entre 80° et 120°. Cet exemple permet d'apporter une résistance supplémentaire aux alvéoles 7 et 8 car tous leurs segments sont parfaitement linéaires.

Comme indiqué précédemment, dans le cadre de la présente demande on entend par « linéaire » un segment dont la flèche est inférieure à 10%. (rapport entre l'écart qui sépare une corde qui sous-tend un segment et le point du segment le plus éloigné de cette corde, et l'amplitude de la corde).

Dans l'exemple représenté par la figure 4, le renfort secondaire 6 est disposé en-dessous du renfort principal 5, de manière à ce que ledit renfort secondaire 6 s'emboîte dans le renfort principal 5, mettant ainsi en contact les murs 52 et 62, ainsi que les murs 53 et 63. Le fond 61 du renfort secondaire 6 dispose d'une rainure 64 dont la concavité est dirigée vers la doublure 3. La rainure 64 comporte un fond 641 reliée à chacune de ses deux extrémités à un flanc 642 et 643. Les flancs 642 et 643 sont sensiblement perpendiculaires au fond 641, les angles formés par les flancs 642 et 643 avec le fond 641 étant compris entre 80° et 120°. L'orientation ainsi que la profondeur de la rainure 64 permet de mettre en contact le fond 641 avec le fond 51 du renfort principal 5. Le renfort principal 5 dispose également de deux rainures 57 et 58 qui sont localisées entre les murs 52, 53 et les bras 54, 55. La concavité des rainures 57 et 58 est dirigée vers le côté de caisse 2. Ces deux rainures 57 et 58 permettent d'augmenter la résistance du renfort 5 à l'application d'une compression transversale à la poutre 1 ainsi qu'à la flexion induite par cette compression, cette compression étant créée par exemple par une collision entre deux véhicules. La disposition des renforts 5 et 6 permet ainsi de former deux alvéoles 7 et 8. Les segments de l'alvéole 7 sont formés par le mur 52, le fond 51, le flanc 642 de la rainure 64, et le fond 61. Les segments de l'alvéole 8 sont formés par le mur 53, le fond 51, le flanc 643 de la rainure 64, et le fond 61. Ainsi, les alvéoles 7 et 8 disposent de quatre segments, dont deux sont transversaux au fond 51 du renfort principal 5, et les deux autres sont sensiblement perpendiculaires aux premiers, les angles formés par les segments étant compris entre 80° et 120°. Cet exemple permet d'apporter une résistance supplémentaire aux alvéoles 7 et 8 car tous leurs segments sont parfaitement linéaires. D'une manière additionnelle, deux renforts secondaires en L peuvent être disposés de chaque côté du renfort principal 5 de manière à créer deux alvéoles. Chacun des renforts secondaire étant relié à un mur 52, 53 et au fond 51 du renfort principal 5. Ces renforts secondaires peuvent être d'épaisseurs ou de formes différentes afin de créer une dissymétrie. Une telle variante est illustrée dans la figure 15, sur laquelle les deux renforts secondaires sont références 6 et 6bis.

Dans l'exemple schématisé par la figure 5, le renfort secondaire 6 est disposé en-dessous du renfort principal 5, de manière à ce que ledit renfort secondaire 6 s'emboîte dans ledit renfort principal 5, mettant ainsi en contact le mur 53 avec le mur 63. Le fond 51 du renfort principal 5 dispose d'une rainure 56 dont la concavité est dirigée vers le côté de caisse 2. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. Le fond 61 du renfort secondaire 6 dispose d'une rainure 64 dont la concavité est orientée vers la doublure 3. La rainure 64 comporte un fond 641 reliée à une de ses deux extrémités à un flanc 643. Le flanc 643 est sensiblement perpendiculaires au fond 641, l'angles formé par le flancs 643 avec le fond 641 étant compris entre 80° et 120°. L'orientation, ainsi que la profondeur, des rainures 56 et 64 permettent de mettre en contact les renforts 5 et 6 au niveau du fond 561 et 641 de leur rainure respective 56 et 64. L'angle formé par les flancs 563 et 643, est compris entre 160° et 180°. La disposition des renforts 5 et 6 permet ainsi de former une alvéole 8 qui dispose de cinq segments formés par le fond 61, le flanc 643 de la rainure 64, le flanc 543 la rainure 56, le fond 51 et le mur 53. L'alvéole 8 comprend donc bien quatre segments dont deux premiers segments sont transversaux au fond 51 du renfort principal 5, et deux segments sont sensiblement perpendiculaires auxdits deux premiers segments.

Selon une variante de cet exemple, les flancs 563 et 643 ne forment sensiblement qu'un seul segment, car les renforts 5 et 6 étant fixés entre eux, les rainures 64 et 56 ne peuvent bouger de manière indépendante l'une de l'autre, et l'angle formé par les flancs 563 et 643 des rainures 56 et 64 est sensiblement plat, car la flèche du segment formé par les flancs 563 et 643 est inférieure à 10% (lorsque l'angle entre les flancs 563 et 643 est proche de 180°)

Cet exemple permet de rendre la structure interne de la poutre 1 dissymétrique, l'alvéole 8 étant excentrée vers un côté de la poutre 1, afin de créer une zone où la résistance est moindre. La création d'une zone de moindre résistance permet de forcer la déformation lors d'une collision à se produire telle que prévue, afin que la structure du véhicule se déforme en minimisant les risques pour les passagers dudit véhicule.

Dans l'exemple décrit par la figure 6, le renfort secondaire 6 est disposé en-dessous du renfort principal 5, de manière à ce que ledit renfort secondaire 6 s'emboîte dans ledit renfort principal 5, mettant ainsi en contact le mur 52 avec le mur 62, et le mur 53 avec le mur 63. Le fond 51 du renfort principal 5 dispose d'une rainure 56. La rainure 56 comporte un fond 561 reliée à chacune de ses deux extrémités à un flanc 562 et 563. La rainure 56 est oblique, de sorte que ses flancs soient de longueurs différentes et que les flancs 642 et 643 ne soient pas sensiblement perpendiculaires au fond 641. Dans cet exemple, le flanc 562 est plus long que le flanc 563. La concavité de la rainure 56 est dirigée vers le côté de caisse 2. Le fond 61 du renfort secondaire 6 dispose d'une rainure 64. La rainure 64 comporte un fond 641 reliée à chacune de ses deux extrémités à un flanc 642 et 643. La rainure 64 est oblique, de manière à être parallèle à la rainure 56. La concavité de la rainure 64 est dirigée vers la doublure 3. L'orientation, ainsi que la profondeur, des rainures 56 et 64 permettent de mettre en contact les renforts 5 et 6 au niveau des fonds 561 et 641 de leur rainure respective 56 et 64. L'angle formé par les flancs 562 et 642 ainsi que l'angle formé par les flancs 563 et 643, sont tous les deux compris entre 160° et 180°. La disposition des renforts 5 et 6 permet ainsi de former deux alvéoles 7 et 8. Les segments de l'alvéole 7 sont formés par le mur 52, le fond 51, le flanc 562 de la rainure 56, le flanc 642 de la rainure 64, et le fond 61. Les segments de l'alvéole 8 sont formés par le mur 53, le fond 51, le flanc 563 de la rainure 56, le flanc 643 de la rainure 64, et le fond 61. Ainsi, les alvéoles 7 et 8 disposent de cinq segments, dont deux sont transversaux au fond 51 du renfort principal 5, et deux autres sont sensiblement perpendiculaires aux premiers, soit globalement parallèles au fond 51.

Selon une variante de cet exemple, les flancs 562, 642 et 563, 643 des rainures 56 et 64 ne forment sensiblement qu'un seul segment pour chacune des alvéoles car les renforts 5 et 6 étant fixés entre eux, les rainures 64 et 56 ne peuvent bouger de manière indépendante l'une de l'autre, et les angles formés par les flancs 562, 642 et 563, 643 des rainures 56 et 64 sont sensiblement plats, car la flèche des segments formés par les flancs 562, 642 et 563, 643 est inférieure à 10% (lorsque les angles entre les flancs 562, 642 et 563, 643 sont proches de 180°).

Cet exemple permet de rendre la structure interne de la poutre 1 dissymétrique, les nervures 56 et 64 étant obliques, afin de créer une zone où la résistance est moindre. La création d'une zone de moindre résistance permet de forcer la déformation lors d'une collision à se produire telle que prévue, afin que la structure du véhicule se déforme en minimisant les risques pour les passagers dudit véhicule.

Dans l'exemple décrit par la figure 7, le renfort secondaire 6 est disposé en-dessous du renfort principal 5, de manière à ce que ledit renfort secondaire 6 s'emboîte dans ledit renfort principal 5, mettant ainsi en contact le mur 52 avec le mur 62, et le mur 53 avec le mur 63. Le fond 51 du renfort principal 5 dispose d'une rainure 56. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. La rainure 56 est excentrée, de sorte qu'elle soit plus proche du mur 53 que du mur 52. La concavité de la rainure 56 est dirigée vers le côté de caisse 2. Le fond 61 du renfort secondaire 6 dispose d'une rainure 64. La rainure 64 comporte un fond 641 reliée à chacune de ses deux extrémités à un flanc 642 et 643. Les flancs 642 et 643 sont sensiblement perpendiculaires au fond 641, les angles formés par les flancs 642 et 643 avec le fond 641 étant compris entre 80° et 120°. La rainure 64 est excentrée, de sorte à être située en face de la rainure 56. La concavité de la rainure 64 est dirigée vers la doublure 3. L'orientation, ainsi que la profondeur, des rainures 56 et 64 permettent de mettre en contact les renforts 5 et 6 au niveau du fond 561 et 641 de leur rainure respective 56 et 64. L'angle formé par les flancs 562 et 642 ainsi que l'angle formé par les flancs 563 et 643, sont tous les deux compris entre 160° et 180°. La disposition des renforts 5 et 6 permet ainsi de former deux alvéoles 7 et 8. Les segments de l'alvéole 7 sont formés par le mur 52, le fond 51, le flanc 562 de la rainure 56, le flanc 642 de la rainure 64, et le fond 61. Les segments de l'alvéole 8 sont formés par le mur 53, le fond 51, le flanc 563 de la rainure 56, le flanc 643 de la rainure 64, et le fond 61. Ainsi, les alvéoles 7 et 8 disposent de cinq segments dont, deux sont sensiblement transversaux au fond 51 du renfort principal 5, et deux autres sont sensiblement perpendiculaires aux premiers, soit globalement parallèles au fond 51.

Selon une variante de cet exemple, les flancs 562, 642 et 563, 643 des rainures 56 et 64 ne forment sensiblement qu'un seul segment pour chacune des alvéoles car les renforts 5 et 6 étant fixés entre eux, les rainures 64 et 56 ne peuvent bouger de manière indépendante l'une de l'autre et que l'angle formé par les flancs 562, 642 et 563, 643 des rainures 56 et 64 sont sensiblement plats, car la flèche des segments formés par les flancs 562, 642 et 563, 643 est inférieure à 10% (lorsque les angles entre les flancs 562, 642 et 563, 643 sont proches de 180°).

Cet exemple permet de rendre la structure interne de la poutre 1 dissymétrique, la cellule 7 étant plus longue que la cellule 8, afin de créer une zone où la résistance est moindre. La création d'une zone de moindre résistance permet de forcer la déformation lors d'une collision à se produire telle que prévue, afin que la structure du véhicule se déforme en minimisant les risques pour les passagers dudit véhicule. Une variante de ce mode de réalisation est illustrée par la figure 16.

Dans l'exemple décrit par la figure 8, le renfort secondaire 6 est disposé en-dessous du renfort principal 5, de manière à ce que ledit renfort secondaire 6 s'emboîte dans ledit renfort principal 5, mettant ainsi en contact le mur 52 avec le mur 62, et le mur 53 avec le mur 63. Le fond 51 du renfort principal 5 dispose d'une rainure 56. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. La concavité de la rainure 56 est dirigée vers le côté de caisse 2. Le fond 61 du renfort secondaire 6 dispose d'une rainure 64. La rainure 64 comporte un fond 641 reliée à chacune de ses deux extrémités à un flanc 642 et 643. Les flancs 642 et 643 sont sensiblement perpendiculaires au fond 641 , les angles formés par les flancs 642 et 643 avec le fond 641 étant compris entre 80° et 120°. Les flancs 642 et 643 sont chacun d'une longueur différente. La concavité de la rainure 64 est dirigée vers la doublure 3. L'orientation, ainsi que la profondeur, des rainures 56 et 64 permettent de mettre en contact les renforts 5 et 6 au niveau du fond 561 et 641 de leur rainure respective 56 et 64. L'angle formé par les flancs 562 et 642 ainsi que l'angle formé par les flancs 563 et 643, sont tous les deux compris entre 160° et 180°. La disposition des renforts 5 et 6 permet ainsi de former deux alvéoles 7 et 8. Les segments de l'alvéole 7 sont formés par le mur 52, le fond 51, le flanc 562 de la rainure 56, le flanc 642 de la rainure 64, et le fond 61. Les segments de l'alvéole 8 sont formés par le mur 53, le fond 51, le flanc 563 de la rainure 56, le flanc 643 de la rainure 64, et le fond 61. Ainsi, les alvéoles 7 et 8 disposent de cinq segments, dont deux sont sensiblement transversaux au fond 51 du renfort principal 5, et deux autres sont sensiblement perpendiculaires aux premiers, soit globalement parallèles au fond 51.

Selon une variante de cet exemple, les flancs 562, 642 et 563, 643 des rainures 56 et 64 ne forment sensiblement qu'un seul segment pour chacune des alvéoles car les renforts 5 et 6 étant fixés entre eux, les rainures 64 et 56 ne peuvent bouger de manière indépendante l'une de l'autre, et que les angles formés par les flancs 562, 642 et 563, 643 des rainures 56 et 64 sont sensiblement plats, car la flèche des segments formés par les flancs 562, 642 et 563, 643 est inférieure à 10% (lorsque les angles entre les flancs 562, 642 et 563, 643 sont proches de 180°).

Cet exemple permet de rendre la structure interne de la poutre 1 dissymétrique, la cellule 7 étant plus haute que la cellule 8, afin de créer une zone où la résistance est moindre. La création d'une zone de moindre résistance permet de forcer la déformation lors d'une collision à se produire telle que prévue, afin que la structure du véhicule se déforme en minimisant les risques pour les passagers dudit véhicule.

Dans l'exemple représenté par la figure 9, deux renforts secondaires 60a et 60b de formes similaires sont disposés en-dessous du renfort principal 5, de manière à ce que le renfort secondaire 60b s'emboîte dans le renfort secondaire 60a, mettant ainsi en contact les murs 620a et 620b, ainsi que les murs 630a et 630b. Le renfort secondaire 60a s'emboîte lui-même dans le renfort principal 5, mettant ainsi en contact les murs 52 et 620a, ainsi que les murs 53 et 630a. Le fond 610a du renfort secondaire 60a dispose d'une rainure 640a dont la concavité est dirigée vers la doublure 3. La rainure 640a comporte un fond 641 a reliée à chacune de ses deux extrémités à un flanc 642a et 643a. Les flancs 642a et 643a sont sensiblement perpendiculaires au fond 641 a, les angles formés par les flancs 642a et 643a avec le fond 641 a étant compris entre 80° et 120°. Le fond 610b du renfort secondaire 60b dispose d'une rainure 640b dont la concavité est dirigée vers la doublure 3. La rainure 640b comporte un fond 641 b reliée à chacune de ses deux extrémités à un flanc 642b et 643b. Les flancs 642b et 643b sont sensiblement perpendiculaires au fond 641 b, les angles formés par les flancs 642b et 643b avec le fond 641 b étant compris entre 80° et 120°. L'orientation, ainsi que la profondeur, des rainures 640a et 640b permettent de mettre en contact les flancs 642a, 642b et 643a, 643b des rainures 640a et 640b en emboîtant la rainure 640b dans la rainure 640a sans mettre en contact le fond 641 a de la rainure 640a avec le fond 641 b de la rainure 640b. L'orientation, ainsi que la profondeur, de la rainure 640a permettent de mettre en contact le fond 640a avec le fond 51 du renfort principal 5. Le renfort principal 5 dispose également de deux rainures 57 et 58 qui sont localisées entre les murs 52, 53 et les bras 54, 55. La concavité des rainures 57 et 58 est dirigée vers le côté de caisse 2. Ces deux rainures 57 et 58 permettent d'augmenter la résistance du renfort 5 à l'application d'une compression transversale à la poutre 1, ainsi qu'à la flexion induite par cette compression, cette compression étant créée par une collision entre deux véhicules. La disposition des renforts 5, 60a et 60b permet ainsi de former cinq alvéoles 7a, 7b, 8a, 8b et 9. Les segments de l'alvéole 7a sont formés par le mur 52, le fond 51, le flanc 642a de la rainure 640a, et le fond 610a. Les segments de l'alvéole 7b sont formés par le mur 620a, le fond 610a, le flanc 642b de la rainure 640b, et le fond 610b. Les segments de l'alvéole 8a sont formés par le mur 53, le fond 51, le flanc 643a de la rainure 640a, et le fond 610a. Les segments de l'alvéole 8b sont formés par le mur 630a, le fond 610a, le flanc 643b de la rainure 640b, et le fond 610b. Les segments de l'alvéole 9 sont formés par le flanc 642a de la rainure 640a, le fond 641 a de la rainure 640a, le flanc 643a de la rainure 640a, et le fond 641 b de la rainure 640b. Ainsi, les alvéoles 7a, 7b, 8a, 8b et 9 disposent de quatre segments, dont deux sont sensiblement transversaux au fond 51 du renfort principal 5, et les deux autres sont sensiblement perpendiculaires aux premiers, soit globalement parallèles au fond 51 , les angles formés par les segments étant compris entre 80° et 120°. Cet exemple permet d'apporter une résistance supplémentaire aux alvéoles 7a, 7b, 8a, 8b et 9 car tous leurs segments sont parfaitement linéaires. Cet exemple permet également d'augmenter le nombre d'alvéoles tout en ajoutant qu'une pièce supplémentaire.

Selon l'exemple représenté dans la figure 12, le renfort secondaire 6 est placé en-dessous du renfort principal 5, de manière à s'emboîter dans ledit renfort principal 5 et à mettre en contact les murs 63 et 53 ainsi que les murs 52 et 62. Le fond 51 du renfort principal 5, dispose d'une rainure 56 qui est centrée par rapport aux deux murs 52 et 53 et dont la concavité est orientée vers la doublure 3. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. Le fond 61 du renfort secondaire 61 comporte également une rainure 64 centrée par rapport aux deux murs 62 et 63, et dont la concavité est orientée vers la doublure 3. La rainure 64 comporte un fond 641 reliée à chacune de ses deux extrémités à un flanc 642 et 643. Les flancs 642 et 643 sont sensiblement perpendiculaires au fond 641, les angles formés par les flancs 642 et 643 avec le fond 641 étant compris entre 80° et 120°. L'orientation, ainsi que la profondeur, des rainures 56 et 64 permettent de mettre en contact les renforts 5 et 6 au niveau du fond 561 et 641 de leur rainure respective 56 et 64. La disposition des renforts 5 et 6 permet ainsi de former trois alvéoles 7, 8 et 9. Les segments de l'alvéole 7 sont formés par le mur 52, le fond 51, le flanc 642 de la rainure 64, et le fond 61. Les segments de l'alvéole 8 sont formés par le mur 53, le fond 51, le flanc 643 de la rainure 64, et le fond 61. Les segments de l'alvéole 9 sont formés par le flanc 562 de la rainure 56, le fond 561 de la rainure 56, le flanc 563 de la rainure 56, et le fond 641 de la rainure 64. Ainsi, les alvéoles 7, 8 et 9 disposent de quatre segments, dont deux premiers segments sont sensiblement transversaux au fond 51 du renfort principal 5, l'angle formé par le fond 51 et lesdits premiers segments étant compris entre 80° et 120°, et les deux autres segments sont sensiblement perpendiculaires aux premiers, soit globalement parallèles au fond 51 , les angles formés par les segments adjacents deux à deux étant compris entre 80° et 120°. Une variante de cet exemple est illustré figure 17. Dans cette variante, la concavités des rainures 56 et 64 sont inversées par rapport à la figure 12.

Selon l'exemple représenté dans la figure 13, le renfort secondaire 6 est placé en-dessous du renfort principal 5, de manière à s'emboîter dans ledit renfort principal 5 et à mettre en contact les murs 63 et 53 ainsi que les murs 52 et 62. Le fond 51 du renfort principal 5, dispose d'une rainure 56 qui est centrée par rapport aux deux murs 52 et 53 et dont la concavité est orientée vers le côté de caisse 2. La rainure 56 comporte un fond 561 reliée à chacune de ses deux extrémités à un flanc 562 et 563. Les flancs 562 et 563 sont sensiblement perpendiculaires au fond 561, les angles formés par les flancs 562 et 563 avec le fond 561 étant compris entre 80° et 120°. Le fond 61 du renfort secondaire 6 comporte deux décrochages ou marches 65 et 66 qui font remonter le fond 61 vers le fond 51. L'angle des décrochages ou marches 65 et 66 est compris entre 80° et 120°. L'orientation, ainsi que la profondeur, de la rainure 56 et des décrochages ou marches 65 et 66 permettent de mettre en contact le fond 61 du renfort secondaire avec le fond 561 et le flanc 562 de la rainure 56, ainsi qu'avec l'extrémité droite du fond 51 du renfort principal 5. L'angle formé par le flanc 563 et le décrochage ou marche 65, est compris entre 160° et 180°. La disposition des renforts 5 et 6 permet ainsi de former une alvéole 8. Les segments de l'alvéole 8 sont formés par le mur 53, le fond 51, le flanc 563, le décrochage ou marche 65, et le fond 61. Ainsi, l'alvéole 8 est composée de cinq segments, dont deux premiers segments sont sensiblement transversaux au fond 51 du renfort principal 5, l'angle formé par le fond 51 et lesdits premiers segments étant compris entre 80° et 120°, et deux autres segments qui sont sensiblement perpendiculaires aux premiers segments, soit globalement parallèles au fond 51 .

Selon une variante de cet exemple, le flanc 563 et le décrochage ou marche 65 ne forment sensiblement qu'un seul segment car les renforts 5 et 6 étant fixés entre eux, la rainure 56 et le décrochage ou marche 65 ne peuvent bouger de manière indépendante l'un de l'autre, et l'angle formé par le flanc 563 et le décrochage ou marche 65 est sensiblement plat, car la flèche des segments formés par le flanc 563 et le décrochage ou marche 65 est inférieure à 10% (lorsque l'angle entre le flanc 563 et le décrochage ou marche 65 est proche de 180°)Ce mode de réalisation est une alternative au mode de réalisation présenté dans la figure 5, qui permet de créer une unique alvéole excentrée sur un côté rendant la poutre de carrosserie 1 dissymétrique, tout renforçant le côté sans alvéole.

La poutre 1 peut être réalisée en métal comme de l'acier, dans un plastique qui permet d'alléger la structure tout en conservant sa résistance, ou dans tout autre matériau connu de l'homme du métier apte à apporter une résistance nécessaire à ladite poutre 1.

Le côté de caisse 2, la doublure 3 ainsi que les renforts 5, 6, 60a, 60b peuvent être réalisés par pliage par matriçage, emboutissage, ou par pliages successifs de plaques de métal, par exemple en acier, dont l'épaisseur peut varier entre 0.2 mm et 3 mm. Le côté de caisse 2, la doublure 3 ainsi que les renforts 5, 6, 60a, 60b peuvent être réalisés par exemple, par extrusion de granules de plastique avec des filières qui donnent la forme désirée.

La profondeur des rainures 56, 64, 640a et 640b est comprise entre 8 mm et 50 mm. Ainsi, les alvéoles possèdent une hauteur comprise entre 8 mm et 100 mm.

L'avantage apporté par la structure de la poutre de carrosserie 1 telle que décrite par l'invention, est qu'elle dispose d'alvéoles comportant au moins deux segments qui sont dans la direction de l'effort de compression créé lors de la collision d'un véhicule avec un objet, typiquement avec un autre véhicule, et d'au moins deux autres segments qui sont orientés dans la direction de la flexion induite par l'effort de compression. L'effort de compression étant appliqué transversalement par rapport au fond 51 du renfort principal 5, les segments orientés dans la direction de l'effort de compression sont donc transversaux au fond 51. La flexion induite par l'effort de compression étant transversale à la direction de cet effort, les segments étant orientés dans la direction de la flexion sont donc transversaux aux segments orientés dans la direction de l'effort de compression.

Bien entendu la présente invention n'est pas limitée aux modes de réalisation qui viennent d'être décrits, mais s'étend à toute variante conforme à son esprit. En effet, la géométrie du côté de caisse 2 et de la doublure 3 est variable et n'est pas limitée à la forme de chapeau donnée dans les modes de réalisation présentés. De plus, le côté de caisse 2 et la doublure 3 ne sont pas limités à des formes symétriques par rapport à un plan longitudinal XX représenté sur la figure 1. En outre, les murs 52 et 53 du renfort principal 5 peuvent très bien être de longueurs différentes, faisant ainsi que les bras 54 et 55 ne sont pas coplanaires. De manière additionnelle, des transitions (comme des rainures) peuvent être réalisées sur les murs 52 et 53 ainsi que sur les murs 62 et 63.

Le rapport de la hauteur entre le mur le plus haut du renfort, principal ou secondaire, ayant le mur le plus haut, et les segments sensiblement transversaux au fond 51 du renfort principal 5, est compris entre 0.1 et 1.

Le rapport de la largeur du fond du renfort, principal ou secondaire, ayant le fond le plus large, et des segments parallèles au fond 51 du renfort principal 5, est compris entre 0.20 et 1 .

Le rapport d'épaisseur entre le renfort principal 5 et les renforts 6, 60a, 60b est compris entre 0,3 et 3. De préférence les renforts 6, 60a et 60b sont placés à l'extérieur (au dessus) du renfort principal 5 lorsqu'ils sont plus épais que le renfort principal 5 et inversement ils sont placés à l'intérieur (en dessous) du renfort principal 5 lorsqu'ils sont moins épais que le renfort principal 5. De plus, les renforts secondaires 6, 60a, 60b peuvent être d'épaisseurs différentes.

De plus, le renfort principal 5, et au moins un renfort secondaire 6, 60a, 60b peuvent être réalisés dans des matériaux différents.

Les renforts secondaires 6, 60a, 60b ne courent pas forcement sur toute la longueur de la poutre 1. De plus, sur le long de la poutre 1, il peut y avoir un nombre différent de renforts secondaires 6, 60a, 60b qui peuvent être de formes différentes. Il peut également y avoir un renfort secondaire 6, 60a, 60b dont la forme est variable le long de la poutre 1.

D'une manière avantageuse, des zones de plus faible résistance, ou soft zones, peuvent être réalisées sur le long de la poutre 1, par exemple, des différences de traitement thermique de zones des renforts principal 5 ou secondaires 6, 60a, 60b lors de leur mise en forme, par exemple par emboutissage. La présence de ces soft zones permet d'assurer la déformation de la poutre 1 selon la façon la plus sécuritaire pour les passagers lors d'une collision entre plusieurs véhicules.

Dans un mode de réalisation de l'invention présenté dans la figure 14, les segments 71 et 82 des alvéoles 7 et 8 comportent respectivement une rainure 10 et un décrochage ou marche 11. Cette rainure 10 ou ce décrochage ou marche 11 permet d'augmenter la résistance des segments 71 et 82 en augmentant le nombre de segments orientés suivant la direction de la compression créée par une collision entre des véhicules, ainsi que pour augmenter le nombre de segment orientés dans la direction de la flexion induite par cette compression.

L'invention n'est par ailleurs pas limitée aux modes de réalisation particuliers décrits précédemment. Elle englobe notamment toute combinaison possibles des variantes de réalisation de l'invention ainsi décrites et illustrées sur les figures annexées.

La figure 18 illustre certaine des caractéristiques de base de l'invention. On retrouve sur cette figure 18 une poutre formée par assemblage d'un côté de caisse 2, une doublure 3, un renfort principal 5 et un renfort secondaire 6 et qui possède deux alvéoles 7 et 8 conformes à la définition donnée en revendication indépendante annexée. Sur la figure 18 on a illustré schématiquement en 52a et 53a une liaison soudée, par exemple par soudure laser, entre les murs 52, 53 du renfort principal 5 et les murs 62, 63 du renfort secondaire 6. On a illustré en 54a et 55a une liaison soudée entre les bras 54, 55 du renfort principal 5 et des bras adjacents du côté de caisse 2 et de la doublure 3. On a également illustré sur la figure 18 sous la référence 51 a un contact établi entre le fond 51 du renfort principal 5 et le fond 61 du renfort secondaire 6. Le renfort principal 5 et le renfort secondaire 6 peuvent être assemblés au niveau du contact 51 a, par exemple par soudure laser, ou bien le renfort principal 5 et le renfort secondaire 6 peuvent uniquement être en contact au niveau du contact 51 a sans être assemblés au niveau dudit contact 51a.

Sur la figure 19 on a référencé α l'angle formé par la partie non nervurée du fond 61 du renfort secondaire 6 et le bras 62 dudit renfort secondaire 6. L'angle a est compris entre 80° et 120°, et préférentiellement entre 93° et 1 10°. Par ailleurs, on a référencé β l'angle d'inclinaison des flancs de nervure du fond 61 du renfort secondaire 6, c'est-à-dire l'angle formé par la partie non nervuré du fond 61 et un flanc de ladite nervure. L'angle β formé par le fond 61 du renfort secondaire 6 est compris entre 80° et 120°, et préférentiellement entre 93° et 1 10°. Par ailleurs comme indiqué précédemment selon l'invention, de préférence, chaque mur 52, 53 du renfort principal 5 forme avec le fond 51 un angle compris entre 80° et 120°.

Comme visible sur la figure 18, et comme visible sur la figure 19, les rayons R des angles de transitions entre deux segments adjacents sont inférieurs à 10mm, tant pour le renfort principal 5 que pour le renfort secondaire 6. Cette caractéristique permet d'obtenir un meilleur compromis entre la masse de la poutre de carrosserie 1 et la résistance à la flexion et à la compression de ladite poutre 1. En effet, les angles de transition entre les segments adjacents sont préférentiellement en arc de cercle (pour des raisons de concentration de contrainte ainsi que des raisons dues aux procédés de fabrication), et le fait de privilégier des faibles rayons R des angles de transitions permet de maximiser les segments linéaires efficaces alignés vis-à-vis des sollicitations en compression et/ou en flexion.

On observe à l'examen de la figure 18 que de préférence la hauteur H1 des alvéoles 7, 8 considérée perpendiculairement au fond 51 est de préférence inférieure ou égale au tiers de la profondeur totale P de la poutre. Cette caractéristique permet d'obtenir un bon compromis entre l'augmentation de la masse de la poutre de carrosserie 1 et l'augmentation de la résistance à la flexion et à la compression de ladite poutre 1. On positionne préférentiellement ces alvéoles dans la zone qui travaillera en compression, par exemple dans le cadre d'une flexion de la poutre de carrosserie 1 (l'axe neutre élastique qui délimite la zone sollicité en compression et la zone sollicité en traction, se situe au niveau du centre de gravité de la poutre 1, voir figures 1 et 18). Ainsi pour maximiser le ratio résistance à la flexion/masse, il faut au maximum écarter la matière de l'axe neutre élastique puisque la matière qui est proche de l'axe neutre élastique est moins sollicitée en traction ou en compression lors d'une flexion de la poutre 1.

La figure 20 représente une vue similaire à la figure 18 illustrant un exemple dans lequel la poutre de carrosserie 1 comprend deux renforts secondaires 6 en L qui comprennent chacun un fond 61 et un mur 62. Les renforts secondaires 61 sont assemblés au renfort principal 5 par des contacts 61 a, 52a et 53a. Plus précisément, les renforts secondaires 6 comprennent des murs 62 de faible longueur, de manière à limiter l'augmentation de la masse de la poutre de carrosserie 1. Un premier renfort secondaire 6 est assemblé au renfort principal 5 par une soudure à clin entre son mur 62 et le mur 53 du renfort principal au contact 53a, et par une soudure entre son fond 61 et le fond 51 du renfort principal 5 à un premier contact 61 a. Un deuxième renfort secondaire 6 est assemblé au renfort principal 5 par une soudure à clin entre son mur 62 et le mur 52 du renfort principal 5 au contact 52a, et par une soudure entre son fond 61 et le fond 51 du renfort principal 5 à un deuxième contact 61 a. Dans cette variante, le renfort principal 5 est également assemblé au côté de caisse 2 et à la garniture 3 à des contacts 55a et 54a au niveau de ses bras 54 et 55.

On a représenté sur la figure 21 une vue éclatée d'une poutre de carrosserie 1 formée par la combinaison après assemblage d'un renfort principal 5, d'un renfort secondaire 6 et d'une doublure 3. Sur la figure 21 on a représenté schématiquement en 5s une zone du renfort principal 5 présentant une résistance mécanique plus faible que le reste de la longueur de la poutre 1 suite à un traitement thermique approprié afin de contrôler les caractéristiques mécaniques de cette pièce et notamment contrôler sa déformation en cas de sollicitation.

Comme illustré sur la figure 22, une poutre peut aussi avoir une section qui évolue sur sa longueur.

La figure 22 illustre 5 sections successives de cette poutre de carrosserie 1 et représente son évolution en section. L'on observe en particulier l'évolution de géométrie des alvéoles permettant de contrôler les zones que l'on souhaite privilégier en rigidité.

## Revendications

1. Poutre de carrosserie (1) de véhicule automobile possédant une direction longitudinale et comportant :
- un renfort principal (5) disposant d'un fond (51), deux murs (52, 53) formant avec ledit fond (51) un angle compris entre 80° et 120°, et deux bras (54, 55) sensiblement parallèles au fond (51) en étant inclinés par rapport au fond d'un angle maximal de 10°;
- au moins un renfort secondaire (6, 60a, 60b) disposant d'un fond (61, 610a, 610b) et d'au moins un mur (62, 63, 620a, 620b, 630a, 630b) formant avec le fond (61, 610a, 610b), un angle compris entre 80° et 120°, ledit au moins un renfort secondaire (6, 60a, 60b) est fixé au renfort principal (5) ;
dans laquelle
- le renfort principal (5) et au moins un renfort secondaire (6, 60a, 60b) sont fixés au niveau de chaque mur (52, 53, 62, 63, 620a, 620b, 630a, 630b), l'un au moins des murs (52, 53, 62, 63, 620a, 620b, 630a, 630b) et/ou fond (51, 61, 610a, 610b) du renfort principal (5) et/ou du renfort secondaire (6, 60a, 60b) comportant une transition (56, 64, 640a, 640b) telle que au moins une partie du fond (61, 610a, 610b) du renfort secondaire (6, 60a, 60b) est en contact avec une partie du fond (51) du renfort principal (5),
- la poutre de carrosserie (1) comporte au moins une alvéole (7, 8, 7a, 7b, 8a, 8b, 9) fermée constituée par l'assemblage du renfort principal (5) et d'un renfort secondaire (6, 60a, 60b) et comprenant quatre segments (71, 72, 73, 74, 75, 81, 82, 83, 84, 85) linéaires formés par des éléments des murs (52, 53, 62, 63, 620a, 620b, 630a, 630b) ou des fonds (51 , 61 , 610a, 610b) du renfort principal (5) et/ou du renfort secondaire (6, 60a, 60b), au moins trois segments (71 , 72, 73, 74, 75, 81, 82, 83, 84, 85) linéaires couvrant au moins 50% de la dimension correspondante de l'alvéole (7, 8, 7a, 7b, 8a, 8b, 9), de sorte que deux segments (71, 73, 75, 81 , 83, 85) sont orientés transversalement au fond (51) du renfort principal (5), et les deux autres segments (72, 74, 82, 84) sont sensiblement perpendiculaires auxdits au moins deux premiers segments (71, 73, 75, 81 , 83, 85) selon un angle compris entre 80° et 120° ;
**caractérisée en ce que**
au moins un des segments linéaires (71, 72, 73, 74, 75, 81, 82, 83, 84, 85) comporte une rainure ou un décrochage ou marche.

2. Poutre de carrosserie (1) selon la revendication 1, **caractérisée en ce que** au moins deux renforts secondaires (6, 60a, 60b) sont fixés au niveau de chacun de leurs murs (62, 63, 620a, 620b, 630a, 630b).

3. Poutre de carrosserie (1) selon la revendication 1 ou 2, **caractérisée en ce que** le fond (51) du renfort principal (5) et/ou le fond (61, 610a, 610b) d'au moins un renfort secondaire (6, 60a, 60b) sont nervurés et que ledit fond (51) du renfort principal (5) et/ou ledit fond (61 , 610a, 610b) d'au moins un renfort secondaire (6, 60a, 60b) sont reliés au niveau de leur nervure (56, 64, 640a, 640b) respective ; et/ou au moins deux renforts secondaires (6, 60a, 60b) comportent un fond (61, 610a, 610b) nervuré et lesdits au moins deux renforts secondaires (6, 60a, 60b) sont reliés par chacun de leur fond au niveau de leur nervure respective (64, 640a, 640b).

4. Poutre de carrosserie (1) selon la revendication 3, **caractérisée en ce que** le renfort principal (5) et/ou au moins un renfort secondaire (6, 60a, 60b) comportent un fond (51, 61, 61a, 61b) rainuré dont la rainure (56, 64, 640a, 640b) est centrée.

5. Poutre de carrosserie (1) selon la revendication 3, **caractérisée en ce que** le renfort principal (5) et/ou au moins un renfort (6, 60a, 60b) comportent un fond (51, 61, 610a, 610b) rainuré dont la rainure (56, 64, 640a, 640b) est excentrée sur le côté.

6. Poutre de carrosserie (1) selon la revendication 3, **caractérisée en ce que** le renfort principal (5) et au moins un renfort secondaire (6, 60a, 60b) comportent un fond (51, 61, 610a, 610b) rainuré dont la rainure (56, 64, 640a, 640b) est oblique, et/ou au moins deux renforts secondaires (6, 60a, 60b) comportent un fond (61, 610a, 610b) rainuré dont la rainure (64, 640a, 640b) est oblique.

7. Poutre de carrosserie (1) selon la revendication 3, **caractérisée en ce que** le renfort principal (5) et/ou au moins un renfort secondaire (6, 60a, 60b) comportent un fond (51, 61, 610a, 610b) rainuré dont la rainure (56, 64, 640a, 640b) comporte des flancs (642, 642a, 642b, 643, 643a, 643b) de longueurs différentes.

8. Poutre de carrosserie (1) selon l'une des revendications 1 à 7, **caractérisée en ce qu'**au moins un renfort secondaire (6, 60a, 60b) est disposé au-dessus du renfort principal (5).

9. Poutre de carrosserie (1) selon l'une des revendications 1 à 7, **caractérisée en ce qu'**au moins un renfort secondaire (6, 60a, 60b) est disposé en-dessous du renfort principal (5).

10. Poutre de carrosserie (1) selon l'une des revendications 1 à 9, **caractérisée en ce qu'**au moins un renfort secondaire (6, 6bis) est en forme de L.

11. Poutre de carrosserie (1) selon l'une des revendications 1 à 9, **caractérisée en ce qu'**au moins un renfort secondaire (6, 60a, 60b) est en forme de U.

12. Poutre de carrosserie (1) selon l'une des revendications 1 à 11, **caractérisée en ce que** ladite au moins une alvéole (7, 7a, 7b, 8, 8a, 8b, 9) formée par le renfort principal (5) et un renfort secondaire (6, 60a, 60b) et/ou par au moins deux renforts secondaires (6, 60a, 60b) comporte une hauteur comprise entre 8 mm et 100 mm.

13. Poutre de carrosserie (1) selon l'une des revendications 1 à 12, **caractérisée en ce que** le renfort principal (5) et les renforts secondaires (6, 60a, 60b) comportent un fond (51, 61, 610a, 610b) rainuré comportant une rainure (56, 64, 640a, 640b) de profondeur comprise en 8 mm et 50 mm.

14. Poutre de carrosserie (1) selon l'une des revendications 1 à 13, **caractérisée en ce que** la hauteur (H1) de chaque alvéole (7, 7a, 7b, 8, 8a, 8b, 9) considérée perpendiculairement au fond (51) du renfort principal (5) est inférieure ou égale au tiers de la profondeur totale (P) de la poutre de carrosserie (1).

15. Poutre de carrosserie (1) selon l'une des revendications 1 à 14, **caractérisée en ce que** les rayons (R) des angles de transition entre deux segments (71, 72, 73, 74, 75, 81, 82, 83, 84, 85) linéaires adjacents sont inférieurs à 10mm et ont une dimension inférieure à celle desdits segments (71, 72, 73, 74, 75, 81, 82, 83, 84, 85) adjacents.

## Patentansprüche

1. Karrosserieträger (1) aufweisend eine Längsrichtung und umfassend:
- eine Hauptverstärkung (5), die versehen ist mit einem Boden (51), zwei Wänden (52, 53), welche mit dem Boden (51) einen Winkel von zwischen 80° und 120° bilden, und zwei Armen (54, 55), die im Wesentlichen parallel zum Boden (51) sind und bezüglich des Bodens um einen maximalen Winkel von 10° geneigt sind;
- mindestens eine sekundäre Verstärkung (6, 60a, 60b), welche mit einem Boden (61, 610a, 610b) und mindestens einer Wand (62, 63, 620a, 620b, 630a, 630b) versehen ist, die mit dem Boden (61, 610a, 610b) einen Winkel von zwischen 80° und 120° bildet, wobei die mindestens eine sekundäre Verstärkung (6, 60a, 60b) an der Hauptverstärkung (5) befestigt ist;
wobei
- die Hauptverstärkung (5) und mindestens eine sekundäre Verstärkung (6, 60a, 60b) an der Ebene jeder Wand (52, 53, 62, 63, 620a, 620b, 630a, 630b) befestigt sind, wobei mindestens eine Wand (52, 53, 62, 63, 620a, 620b, 630a, 630b) und/oder Boden (51, 61, 610a, 610b) der Hauptverstärkung (5) und/oder der sekundären Verstärkung (6, 60a, 60b) ein Übergangsstück (56, 64, 640a, 640b) umfasst, so dass mindestens ein Teil des Bodens (61, 610a, 610b) der sekundären Verstärkung (6, 60a, 60b) in Kontakt mit einem Teil des Bodens (51) der Hauptverstärkung (5) ist,
- wobei der Karrosserieträger (1) mindestens einen geschlossenen Hohlraum (7, 8, 7a, 7b, 8a, 8b, 9) umfasst, der durch den Zusammenbau der Hauptverstärkung (5) und einer sekundären Verstärkung (6, 60a, 60b) gebildet ist und umfassend vier lineare Abschnitte (71, 72, 73, 74, 75, 81, 82, 83, 84, 85), die durch Elemente der Wände (52, 53, 62, 63, 620a, 620b, 630a, 630b) oder des Bodens (51 , 61 , 610a, 610b) der Hauptverstärkung (5) und/oder der sekundären Verstärkung (6, 60a, 60b) gebildet sind, wobei mindestens drei lineare Abschnitte (71 , 72, 73, 74, 75, 81, 82, 83, 84, 85) mindestens 50% der entsprechenden Größe des Hohlraums (7, 8, 7a, 7b, 8a, 8b, 9) decken, so dass zwei Abschnitte (71, 73, 75, 81, 83, 85) quer laufend bezüglich des Bodens (51) der Hauptverstärkung (5) gerichtet sind, und die zwei anderen Abschnitte (72, 74, 82, 84) im Wesentlichen senkrecht zu den mindestens zwei ersten Abschnitten (71, 73, 75, 81, 83, 85) gemäß einem Winkel von zwischen 80° und 120° sind;
**dadurch gekennzeichnet, dass**
mindestens einer der linearen Abschnitte (71, 72, 73, 74, 75, 81, 82, 83, 84, 85) einen Schlitz oder eine Erhebung oder eine Stufe umfasst.

2. Karrosserieträger (1) nach Anspruch 1, **dadurch gekennzeichnet, dass** mindestens zwei sekundäre Verstärkungen (6, 60a, 60b) auf der Ebene von jeder der jeweiligen Wände (62, 63, 620a, 620b, 630a, 630b) befestigt sind.

3. Karrosserieträger (1) nach Anspruch 1 oder 2, **dadurch gekennzeichnet, dass** der Boden (51) der Hauptverstärkung (5) und/oder der Boden (61, 610a, 610b) von mindestens einer sekundären Verstärkung (6, 60a, 60b) gerippt sind und dass der Boden (51) der Hauptverstärkung (5) und/oder der Boden (61 , 610a, 610b) von der mindestens einen sekundären Verstärkung (6, 60a, 60b) auf Ebene deren jeweiligen Rippe (56, 64, 640a, 640b) verbunden sind; und/oder mindestens zwei sekundäre Verstärkungen (6, 60a, 60b) einen gerippten Boden (61, 610a, 610b) umfassen und die mindestens zwei sekundäre Verstärkungen (6, 60a, 60b) durch jeden jeweiligen Boden auf Ebene deren jeweiligen Rippe (64, 640a, 640b) verbunden sind.

4. Karrosserieträger (1) nach Anspruch 3, **dadurch gekennzeichnet, dass** die Hauptverstärkung (5) und/oder mindestens eine sekundäre Verstärkung (6, 60a, 60b) einen genuteten Boden (51, 61, 61a, 61b) umfassen, dessen Nute (56, 64, 640a, 640b) zentriert ist.

5. Karrosserieträger (1) nach Anspruch 3, **dadurch gekennzeichnet, dass** die Hauptverstärkung (5) und/oder mindestens eine Verstärkung (6, 60a, 60b) einen genuteten Boden (51, 61, 610a, 610b) umfassen, dessen Nute (56, 64, 640a, 640b) exzentrisch auf der Seite ist.

6. Karrosserieträger (1) nach Anspruch 3, **dadurch gekennzeichnet, dass** die Hauptverstärkung (5) und mindestens eine sekundäre Verstärkung (6, 60a, 60b) einen genuteten Boden (51, 61, 610a, 610b) umfassen, dessen Nute (56, 64, 640a, 640b) schräg ist, und/oder mindestens zwei sekundäre Verstärkungen (6, 60a, 60b) einen genuteten Boden (61, 610a, 610b) umfassen, dessen Nute (64, 640a, 640b) schräg ist.

7. Karrosserieträger (1) nach Anspruch 3, **dadurch gekennzeichnet, dass** die Hauptverstärkung (5) und/oder mindestens eine sekundäre Verstärkung (6, 60a, 60b) einen genuteten Boden (51, 61, 610a, 610b) umfassen, dessen Nute (56, 64, 640a, 640b) Flanken (642, 642a, 642b, 643, 643a, 643b) unterschiedlicher Längen umfasst.

8. Karrosserieträger (1) nach einem der Ansprüche 1 bis 7, **dadurch gekennzeichnet, dass** mindestens eine sekundäre Verstärkung (6, 60a, 60b) über der Hauptverstärkung (5) angeordnet ist.

9. Karrosserieträger (1) nach einem der Ansprüche 1 bis 7, **dadurch gekennzeichnet, dass** mindestens eine sekundäre Verstärkung (6, 60a, 60b) unter der Hauptverstärkung (5) angeordnet ist.

10. Karrosserieträger (1) nach einem der Ansprüche 1 bis 9, **dadurch gekennzeichnet, dass** mindestens eine sekundäre Verstärkung (6, 6bis) L-förmig ist.

11. Karrosserieträger (1) nach einem der Ansprüche 1 bis 9, **dadurch gekennzeichnet, dass** mindestens eine sekundäre Verstärkung (6, 60a, 60b) U-förmig ist.

12. Karrosserieträger (1) nach einem der Ansprüche 1 bis 11, **dadurch gekennzeichnet, dass** der mindestens eine Hohlraum (7, 7a, 7b, 8, 8a, 8b, 9), der durch die Hauptverstärkung (5) und eine sekundäre Verstärkung (6, 60a, 60b) und/oder durch mindestens zwei sekundäre Verstärkungen (6, 60a, 60b) gebildet ist eine Höhe von zwischen 8 mm und 100 mm aufweist.

13. Karrosserieträger (1) nach einem der Ansprüche 1 bis 12, **dadurch gekennzeichnet, dass** die Hauptverstärkung (5) und die sekundären Verstärkungen (6, 60a, 60b) einen genuteten Boden (51, 61, 610a, 610b) umfassen, der eine Nute (56, 64, 640a, 640b) einer Tiefe von zwischen 8 mm und 50 mm aufweist.

14. Karrosserieträger (1) nach einem der Ansprüche 1 bis 13, **dadurch gekennzeichnet, dass** die Höhe (H1) jedes Hohlraums (7, 7a, 7b, 8, 8a, 8b, 9), der als senkrecht zum Boden (51) der Hauptverstärkung (5) betrachtet ist, geringer oder gleich ein Drittel der gesamten Tiefe (P) des Karrosserieträgers (1) ist.

15. Karrosserieträger (1) nach einem der Ansprüche 1 bis 14, **dadurch gekennzeichnet, dass** die Radien (R) der Übergangswinkel zwischen zwei linearen angrenzenden Abschnitten (71, 72, 73, 74, 75, 81, 82, 83, 84, 85) kleiner als 10 mm sind und eine Größe geringer als die der angrenzenden (71, 72, 73, 74, 75, 81, 82, 83, 84, 85) Abschnitte haben.

## Claims

1. A motor vehicle bodywork beam (1) having a longitudinal direction and comprising:
- a main reinforcement (5) provided with a bottom (51), two walls (52, 53) forming together with said bottom (51) an angle comprised between 80° and 120°, and two arms (54, 55) that are substantially parallel to the bottom (51) and being inclined with respect to the bottom at a maximum angle of 10°;
- at least one secondary reinforcement (6, 60a, 60b) provided with a bottom (61, 610a, 610b) and at least one wall (62, 63, 620a, 620b, 630a, 630b) forming with the bottom (61, 610a, 610b) an angle comprised between 80° and 120°, said at least one secondary reinforcement (6, 60a, 60b) is fixed to the main reinforcement (5);
wherein
- the main reinforcement (5) and at least one secondary reinforcement (6, 60a, 60b) are fixed at the level of each wall (52, 53, 62, 63, 620a, 620b, 630a, 630b), comprising at least one of the walls (52, 53, 62, 63, 620a, 620b, 630a, 630b) and/or bottom (51, 61, 610a, 610b) of the main reinforcement (5) and/or of the secondary reinforcement (6, 60a, 60b) a transition part (56, 64, 640a, 640b) such that at least one part of the bottom (61, 610a, 610b) of the secondary reinforcement (6, 60a, 60b) is in contact with one part of the bottom (51) of the main reinforcement (5),
- the vehicle bodywork beam (1) comprises at least one closed cell (7, 8, 7a, 7b, 8a, 8b, 9) formed by the assembly of the main reinforcement (5) and a secondary reinforcement (6, 60a, 60b) and comprising four linear segments (71, 72, 73, 74, 75, 81, 82, 83, 84, 85) formed by elements of the walls (52, 53, 62, 63, 620a, 620b, 630a, 630b) or of the bottoms (51 , 61 , 610a, 610b) of the main reinforcement (5) and/or of the secondary reinforcement (6, 60a, 60b), at least three linear segments (71 , 72, 73, 74, 75, 81, 82, 83, 84, 85) covering at least 50% of the corresponding dimension of the cell (7, 8, 7a, 7b, 8a, 8b, 9), so that two segments (71, 73, 75, 81, 83, 85) have an orientation which is transversal to the bottom (51) of the main reinforcement (5), and the two other segments (72, 74, 82, 84) are substantially perpendicular to said at least two first segments (71, 73, 75, 81, 83, 85) according to an angle comprised between 80° and 120°;
**characterized in that**
at least one of the linear segments (71, 72, 73, 74, 75, 81, 82, 83, 84, 85) comprises a groove or a slope or step.

2. A vehicle bodywork beam (1) according to claim 1, **characterized in that** at least two secondary reinforcements (6, 60a, 60b) are fixed at the level of each of their walls (62, 63, 620a, 620b, 630a, 630b).

3. A vehicle bodywork beam (1) according to claim 1 or 2, **characterized in that** the bottom (51) of the main reinforcement (5) and/or the bottom (61, 610a, 610b) of at least one secondary reinforcement (6, 60a, 60b) are ribbed and that said bottom (51) of the main reinforcement (5) and/or said bottom (61 , 610a, 610b) of at least one secondary reinforcement (6, 60a, 60b) are connected at the level of their respective rib (56, 64, 640a, 640b); and/or at least two secondary reinforcements (6, 60a, 60b) comprise a ribbed (61, 610a, 610b) bottom and said at least two secondary reinforcements (6, 60a, 60b) are connected by each one of their respective bottoms at the level of their respective rib (64, 640a, 640b).

4. A vehicle bodywork beam (1) according to claim 3, **characterized in that** the main reinforcement (5) and/or at least one secondary reinforcement (6, 60a, 60b) comprise a grooved bottom (51, 61, 61a, 61b), with its groove (56, 64, 640a, 640b) being centred.

5. A vehicle bodywork beam (1) according to claim 3, **characterized in that** the main reinforcement (5) and/or at least one reinforcement (6, 60a, 60b) comprise a grooved bottom (51, 61, 610a, 610b), with its groove (56, 64, 640a, 640b) being offset on the side.

6. A vehicle bodywork beam (1) according to claim 3, **characterized in that** the main reinforcement (5) and at least one secondary reinforcement (6, 60a, 60b) comprise a grooved bottom (51, 61, 610a, 610b), with its groove (56, 64, 640a, 640b) being slanted, and/or at least two secondary reinforcements (6, 60a, 60b) comprise a grooved bottom (61, 610a, 610b), with its groove (64, 640a, 640b) being slanted.

7. A vehicle bodywork beam (1) according to claim 3, **characterized in that** the main reinforcement (5) and/or at least one secondary reinforcement (6, 60a, 60b) comprise a grooved bottom (51, 61, 610a, 610b), its groove (56, 64, 640a, 640b) comprising flanks (642, 642a, 642b, 643, 643a, 643b) of different lengths.

8. A vehicle bodywork beam (1) according to one of claims 1 to 7, **characterized in that** at least one secondary reinforcement (6, 60a, 60b) is arranged above the main reinforcement (5).

9. A vehicle bodywork beam (1) according to one of claims 1 to 7, **characterized in that** at least one secondary reinforcement (6, 60a, 60b) is arranged under the main reinforcement (5).

10. A vehicle bodywork beam (1) according to one of claims 1 to 9, **characterized in that** at least one secondary reinforcement (6, 6bis) is L-shaped.

11. A vehicle bodywork beam (1) according to one of the claims 1 to 9, **characterized in that** at least one secondary reinforcement (6, 60a, 60b) is U-shaped.

12. A vehicle bodywork beam (1) according to one of claims 1 to 11, **characterized in that** said at least one cell (7, 7a, 7b, 8, 8a, 8b, 9) formed by the main reinforcement (5) and one secondary reinforcement (6, 60a, 60b) and/or by at least two secondary reinforcements (6, 60a, 60b) has a height comprised between 8 mm and 100 mm.

13. A vehicle bodywork beam (1) according to one of claims 1 to 12, **characterized in that** the main reinforcement (5) and the secondary reinforcements (6, 60a, 60b) comprise a grooved bottom (51, 61, 610a, 610b) having a groove (56, 64, 640a, 640b) of a depth comprised between 8 mm and 50 mm.

14. A vehicle bodywork beam (1) according to one of claims 1 to 13, **characterized in that** the height (H1) of each cell (7, 7a, 7b, 8, 8a, 8b, 9) that is considered to be perpendicular to the bottom (51) of the main reinforcement (5) is less than or equal to one third of the total depth (P) of the vehicle bodywork beam (1).

15. A vehicle bodywork beam (1) according to one of claims 1 to 14, **characterized in that** the radii (R) of the transition angles between two adjacent linear segments (71, 72, 73, 74, 75, 81, 82, 83, 84, 85) are less than 10 mm and have a dimension smaller than that of said adjacent segments (71, 72, 73, 74, 75, 81, 82, 83, 84, 85).
